# EUROPÄISCHE PATENTSCHRIFT

(11) **EP 2 651 730 B1**
(45) Veröffentlichungstag und Bekanntmachung des Hinweises auf die Patenterteilung: **19.11.2014**
(21) Anmeldenummer: 11790955.6
(22) Anmeldetag: 29.11.2011
(51) Int. Cl.: B60T 13/74, F16D 65/18

(54) **ELEKTROMECHANISCH BETÄTIGBARE BREMSE UND VERFAHREN ZUM BETREIBEN EINER ELEKTROMECHANISCH BETÄTIGBAREN BREMSE**
ELECTROMECHANICALLY ACTUATABLE BRAKE AND METHOD FOR OPERATING AN ELECTROMECHANICALLY ACTUATABLE BRAKE
FREIN À ACTIONNEMENT ÉLECTROMÉCANIQUE ET PROCÉDÉ PERMETTANT DE FAIRE FONCTIONNER UN FREIN À ACTIONNEMENT ÉLECTROMÉCANIQUE

(30) Priorität: 17.12.2010 DE 102010063320
(43) Veröffentlichungstag der Anmeldung: 23.10.2013
(73) Patentinhaber: Continental Teves AG & Co. oHG, 60488 Frankfurt (DE)
(72) Erfinder: SCHOMMER, Markus, 66119 Saarbrücken (DE); BAUKHOLT, Theo, 65830 Kriftel (DE); POWILEIT, Hendrik, 61389 Schmitten (DE)
(86) Internationale Anmeldenummer: PCT/EP2011/071265
(87) Internationale Veröffentlichungsnummer: WO 2012/079969

(56) Entgegenhaltungen:
- WO-A1-2004/001254
- DE-A1-102007 046 953
- US-A1- 2003 136 616

## Beschreibung

Die Erfindung betrifft eine elektromechanisch betätigbare Bremse mit einem elektrisch betätigbaren Aktuator zum Zuspannen der Bremse in einer Zuspannrichtung, der eine rotatorische Bewegung einer Spindel in eine translatorische Bewegung eines Zuspannelementes, insbesondere eines Kolbens, umsetzt, wobei die Spindel von einem Elektromotor angetrieben wird, wobei ein mechanischer Speicher zur Energiespeicherung durch Verdrehen vorgesehen ist, dessen erstes Ende mit der Spindel gekoppelt ist und dessen zweites Ende mit einem Gegenlager gekoppelt ist, wobei der Speicher beim Drehen der Spindel in Zuspannrichtung Energie aufnimmt, durch die im stromlosen Zustand des Elektromotors die Spindel entgegengesetzt zur Zuspannrichtung zurückgedreht wird, wodurch die Bremse gelöst wird.

Derartige Bremsen finden beispielsweise bei Brake-by-Wire-Bremssystemen Anwendung. Bei derartigen Bremssystemen ist der direkte bzw. unmittelbare Zugriff des Fahrers auf die Bremsen nicht möglich und auch nicht erwünscht. Während bei gewöhnlichen hydraulischen Bremssystemen der Fahrer durch Betätigung des Bremspedals hydraulische Bremsflüssigkeit in die Bremsen verschiebt, wodurch die Betriebsbremsen betätigt werden und das Fahrzeug abgebremst wird, sind bei Brake-by-Wire-Bremssystemen die Betätigung des Bremspedals und die Betätigung bzw. aktive Ansteuerung der Bremsen voneinander entkoppelt. Der Fahrer betätigt bei derartigen Bremssystemen eine Betätigungseinheit, bei der durch einen Sensor, beispielsweise einen Pedalwegsensor, der Pedalweg gemessen wird. Diese Information wird dann von einer elektronischen Steuereinheit benutzt, um den aktiv ansteuerbaren Bremsen einen Befehl zum Zuspannen zu geben. Bei elektromechanisch betätigbaren Bremsen bzw. elektromechanischen Bremsen (EMB) wird dazu ein Elektromotor angesteuert, dessen Drehbewegung über ein Übersetzungsgetriebe durch einen Aktuator in eine translatorische Bewegung überführt wird, durch die beispielsweise bei Scheibenbremsen die Bremsbeläge auf die Bremsscheibe gepresst werden.

In Brake-by-Wire-Systemen lassen sich Komfortfunktionen wie beispielsweise eine Feststellbremsfunktionalität, die das Fahrzeug beispielsweise beim Abstellen am Hang hält, sowie Sicherheitsfunktionen wie beispielsweise ABS auf komfortable Art realisieren. Durch die unmittelbare Entkopplung von Bremspedal und Betätigung der Betriebsbremsen entfällt bei einem ABS-Regelungsvorgang beispielsweise das bei hydraulischen Bremssystemen bekannte "Pumpen" des Bremspedals.

Ein wichtiges Sicherheitskriterium bzw. sicherheitsrelevantes Auslegungskriterium für Bremssysteme und deren zugehörige Bremsen ist die Implementierung einer Rückfallebene für den Fall, dass wichtige Komponenten ausfallen. Beispielsweise soll bei hydraulischen Systemen mit Bremskraftverstärker sichergestellt werden, dass bei einem Ausfall des Bremskraftverstärkers der Fahrer trotzdem noch das Fahrzeug in ausreichendem Maße durch stärkere Betätigung des Bremspedals verzögern kann.

Aus sicherheitstechnischen Gründen muss darüberhinaus bei einem Ausfall des Bordnetzes sichergestellt werden, dass das Fahrzeug manövrierfähig bleibt. Eine fahrdynamische Situation, die in jedem Fall vermieden werden sollte, ist, dass bei einem derartigen Systemausfall die Bremsen zugespannt bleiben. Dies ist insbesondere bei Brake-by-Wire-Systemen relevant. Hat beispielsweise der Fahrer die Betätigungseinheit betätigt, wodurch die elektromechanisch betätigbaren Bremsen zugespannt wurden, und fällt nun das Bordnetz aus, muss sichergestellt werden, dass die Bremsbeläge sich wieder von den entsprechenden Bremsscheiben lösen. Geschieht dies nicht, so wird das Fahrzeug schwer bis gar nicht kontrollierbar und kann insbesondere bei kleinem Reibwert auf dem Bodenbelag ins Schleudern geraten.

Damit sich in einem solchen Fall des Ausfalls des Bordnetzes die Bremsbeläge wieder von den Bremsscheiben lösen, sollte in einer EMB ein entsprechender Mechanismus vorhanden sein, der diese Aufgabe erfüllt. Ein derartiger Mechanismus darf nicht von einer Spannungsversorgung durch das Bordnetz abhängen, da dieses in der besagten Situation gerade nicht zur Verfügung steht. Er sollte gerade im stromlosen Zustand der Bremse durch eine separate Stromversorgung oder auf mechanischem Wege zu deren Lösung dienen.

Elektrische Bremsen sollen folglich im Fehlerfall in einen sicheren bremsmomentenfreien Zustand übergehen. Diese Forderung ist in sehr kurzer Zeit (50 ms bei Vorderradbremsen, ca. 500 ms bei Hinterradbremsen) zu erfüllen, damit die Seitenführungskraft des betroffenen Rades und damit die Lenkfähigkeit und die Stabilität des Gesamtfahrzeugs nicht gefährlich beeinträchtigt werden. Solange der Antriebsstrang der elektrischen Radbremsen noch kontrolliert ansteuerbar ist, kann im Falle eines kritischen Fehlers, z. B. Ausfall des Kraftsensors, die Bremsmomentenfreiheit über ein aktives Zurückfahren des Bremsbelages erreicht werden. Bricht der Energiepfad zum Radbremsaktuator hingegen durch einen Fehler im Bordnetz, in der elektronischen Ansteuerung oder im elektrischen Motor selbst zusammen, oder liegt ein anders begründeter Ausfall des Antriebsstrangs vor, muss die Bremse ohne externe Energieversorgung, d. h. stromlos selbstöffnend, ausgeführt sein und entsprechend reagieren. Die Eigenschaft "stromlos selbstöffnend" macht die Bremse eigensicher und ermöglicht im Fall von Software-Fehlern auch ein vorteilhaftes externes Abschalten durch ein externes Steuergerät, welches eine Unterbrechung der Stromversorgung zur Radbremse erwirkt.

Steht keine elektrische Energieversorgung zur Verfügung, so muss mit der während des Bremsvorgangs in das System eingebrachten mechanischen Energie (Aufweitung des Bremssattels) der sichere, bremsmomentenfreie Zustand erreicht werden. Da unter ungünstigen Bedingungen (z. B. niedrige Umgebungstemperaturen oder erhöhte Reibung durch Verschleiß) sich im zurückdrehenden elektromechanischen System ein niedriger mechanischer Wirkungsgrad einstellen kann, liegt somit im Fehlerfall entweder ein zu hohes Restbremsmoment am Rad an, oder die erforderliche Zeit zum Unterschreiten eines bestimmten Grenzwertes ist zu groß.

Es ist daher notwendig, einen unabhängigen Energiespeicher darzustellen, der eine bestimmte minimale Energiemenge im Fehlerfall zur Verfügung stellt, um ein sicheres Öffnen der Bremse innerhalb vorgeschriebener Zeit zu ermöglichen.

Bei bekannten elektromechanischen Bremsen lässt sich die in einem derartigen unabhängigen Energiespeicher gespeicherte Energie nicht automatisch bzw. selbstständig an die Verschleißsituation der Beläge bzw. der Bremsbeläge anpassen oder der Nachstellmechanismus ist derart ausgeführt, dass erst ein bestimmter Drehwinkel der Spindel zurückgelegt werden muss, bevor ein automatisches Öffnen der Bremse im Fehlerfall sicher dargestellt werden kann. Eine elektromechanisch betätigbare Scheibenbremse, bei der im stromlosen Zustand des Elektromotors ein Lösen des Bremsbelags von der Bremsscheibe durch einen Federspeicher erreicht wird, ist beispielsweise aus der DE 198 07 328 C2 bekannt.

DE 10 2007 046953 A1 offenbart einen Kugelgewindetrieb für eine Kraftfahrzeugbremse, mit einer drehantreibbaren Spindel, einer nach Maßgabe des Drehantriebs der Spindel relativ zu dieser axial beweglichen Mutter und einer Wälzkörperanordnung, die zwischen der Spindel und der Mutter angeordnet und relativ zu diesen verlagerbar ist. Bei diesem ist vorgesehen, dass die Wälzkörperanordnung über ein Federelement in eine vorbestimmte Ausgangsstellung vorgespannt ist.

Der Erfindung liegt daher die Aufgabe zu Grunde, eine elektromechanisch betätigbare Bremse, insbesondere für Kraftfahrzeuge, bereitzustellen, welche sich automatisch an die Verschleißsituation der Bremsbeläge anpasst und bei der unabhängig vom zurückgelegten Gesamtdrehwinkel der Spindel diese im Fehlerfall um einen bestimmten Winkelbetrag zurückgedreht werden kann, ohne dass das von dem Energiespeicher erzeugte Drehmoment zu groß wird oder der Antriebsmotor zu groß dimensioniert werden muss. Weiterhin soll ein Betriebsverfahren für eine derartige elektromechanisch betätigbare Bremse angegeben werden.

In Bezug auf die elektromechanisch betätigbare Bremse wird diese Aufgabe erfindungsgemäß dadurch gelöst, dass das Gegenlager drehbar gelagert ist und in einer Mehrzahl von diskret oder kontinuierlich angeordneten Feststellpositionen feststellbar ist.

Vorteilhafte Ausgestaltungen der Erfindung sind Gegenstand der Unteransprüche.

Die Erfindung geht von der Überlegung aus, dass an einen Notlösemechanismus für elektromechanisch betätigbare Bremsen, der im Fehlerfall die Bremsbeläge von der Bremsscheibe zurückfährt bzw. im allgemeineren Sinne die Bremse löst, verschiedene sicherheitstechnische Anforderungen gestellt werden müssen. Ein in einem derartigen Mechanismus verwendeter Energiespeicher sollte beispielsweise eine minimale Energiemenge zur Verfügung stellen, die zum sicheren bzw. zuverlässigen Erreichen eines gelösten Zustandes der Bremse notwendig ist. Die gespeicherte Energie sollte darüber hinaus auf einen Maximalwert begrenzt werden, so dass für einen Bremsvorgang genügend Energie zur Verfügung steht. Ein derartiger Energiespeicher sollte zudem seine gespeicherte Energie selbstständig, d. h. ohne Fremdeinwirkung, abgegeben können.

Wie alle anderen Bauteile auch sollte der Energiespeicher wiederverwendbar sein. Eine vorgegebene Mindestanzahl von Notauslösungen sollte ohne Schäden an den entsprechenden Bauteilen bzw. Baugruppen durchführbar sein. Unter allen Umständen muss vermieden werden, dass beim Verfahren des Bremskolbens in beliebiger Richtung durch die im Energiespeicher gespeicherte Energie ein selbstständiges Zuspannen der Bremse erfolgt. Mit anderen Worten: Der Energiespeicher muss unter allen Umständen während des gewöhnlichen Normalbetriebs der Betriebsbremsen ohne aktive Funktion bleiben, sollte aber wiederum während einer Notsituation in zuverlässiger Weise die gespeicherte Energie freigeben und dadurch zu einem Lösen der Bremse führen.

Ein Notlösemechanismus für die Bremse muss weiterhin ausfallsicher und diagnostizierbar sein. Sicherheitskritische Fehler müssen entweder durch Diagnose erkannt werden können oder müssen eine extrem geringe Auftrittswahrscheinlichkeit aufweisen (Fehlerauftretenswahrscheinlichkeit kleiner als 10⁻⁹). Schlafende Fehler sind insgesamt nicht zulässig.

Eine weitere wichtige Anforderung an einen derartigen Notlösemechanismus ist, dass er bei zunehmendem Verschleiß der Bremsbeläge zuverlässig und mit vorgegebener bzw. vorhersehbarer Wirksamkeit arbeitet. So fordern verschlissene Bremsbeläge beispielsweise, dass sich beim Zuspannen der Bremse die Spindel in Zuspannrichtung etwas weiter drehen muss als bei neuen Bremsbelägen. Ein gewöhnlicher Energiespeicher, der in Zuspannrichtung der Bremse mit Energie geladen wird, würde somit bei verschlissenen Bremsbelägen mehr Energie aufnehmen als bei neuen Bremsbelägen. Dadurch würde dann weniger Energie zum eigentlichen Zuspannen der Bremse zur Verfügung stehen. Zudem sollte diese Energiemenge auch nicht zu stark anwachsen, so dass im Notlösefall bei der Freiwerdung der im Energiespeicher gespeicherten Energie der Bremskolben nicht zu schnell bzw. zu stark zurückgefahren wird und Baugruppen, die in dieser Rückfahrrichtung liegen, beschädigt werden.

Wie nunmehr erkannt wurde, lassen sich die genannten Forderungen erfüllen, indem das Gegenlager, an dem der Energiespeicher befestigt ist, drehbar gelagert ist und in einer Mehrzahl von Positionen feststellbar ist. Dadurch wird dem Notlösemechanismus die Möglichkeit gegeben, das Gegenlager in eine solche Position zu bringen und dann zu arretieren, dass die gewünschte und vorgegebene Energiemenge in dem Energiespeicher gespeichert werden kann. Sind in diesem Fall die Bremsbeläge ein Stück weit verschlissen, so dass die Spindel in Zuspannrichtung zum Zuspannen der Bremse etwas weiter drehen muss, kann das Gegenlager in eine solche Position gebracht werden, dass die gleiche Energiemenge in den Speicher gespeichert wird wie bei unverschlissenen Bremsbelägen und der dazu korrespondierenden Position des Gegenlagers. Durch diese Maßnahmen ist der Notlösemechanismus ertüchtigt, auf zuverlässige Weise genau die vorgegebene und benötigte Energiemenge zum Lösen der Bremse aufzuwenden. Die Bremse kann somit jederzeit und verlässlich mindestens ins Lüftspiel zurückfallen, wobei bei einer Scheibenbremse zwischen Bremsbelag und Bremsscheibe ca. 0,2 bis 0,3 mm Abstand besteht.

In einer bevorzugten Ausführungsform ist der Speicher als Spiralfeder ausgestaltet. Eine Spiralfeder kann in optimierter und platzsparender Weise an dem den Bremsbelägen abgewandten Ende der Spindel am Kopf der Spindel mit ihrem äußeren bzw. ersten Ende und an dem Gegenlager mit ihrem inneren bzw. zweiten Ende befestigt werden. Eine Spiralfeder ist zudem ausfallsicher und wartungsarm. Sie muss erst nach einer großen Anzahl von Notauslösungen ausgewechselt werden. Spiralfedern werden beispielsweise in elektromechanischen Drosselklappenstellern verwendet, um bei Unterbrechung der Versorgungsspannung die Drosselklappe sicher zu schließen. Die Spiralfeder wird dort bei der Montage vorgespannt, so dass die Forderung "stromlos selbstschließend" unter allen Betriebsbedingungen (insbesondere Tieftemperatur) und auch bei kleinen Auslenkungen erfüllt wird. Der maximale Drehwinkel zwischen der Stellung "Drosselklappe offen" und "Drosselklappe geschlossen" beträgt ca. 90°. Der Stellmotor ist dabei so dimensioniert, dass er im genutzten Winkelbereich stark genug ist, um gegen die Spiralfeder zu arbeiten. In ähnlicher Weise ist bei der elektromechanisch betätigbaren Bremse die Spiralfeder im Betriebszustand vorgespannt, so dass sie bei Ausfall des Bordnetzes die Spindel zurückdreht und die Bremse löst. Das Gegenlager ist vorzugsweise als Scheibe ausgestaltet, wobei diese Scheibe und die Spiralfeder vorteilhafterweise koaxial zueinander und koaxial zu der Spindel ausgerichtet sind. Die Scheibe kann beispielsweise in Hubrichtung des Bremskolbens gesehen direkt hinter bzw. unter der Spiralfeder angebracht sein.

In einer vorteilhaften Ausführungsform weist die elektromechanisch betätigbare Bremse einen durch ein mit der Spindel verbundenes Auslöseelement betätigbaren Feststellmechanismus auf, dessen Betätigung zu einer Drehung des Gegenlagers in Zuspannrichtung und zu einer Feststellung bzw. Arretierung in einer benachbarten Feststellposition führt. Ein derartiger Feststell- bzw. Arretierungsmechanismus erlaubt die selbstständige bzw. automatische Nachjustierung des Energiespeichers ohne große zusätzliche Kräfte. Dabei ist ein Auslöseelement mit der Spindel verbunden bzw. an ihr befestigt (beispielsweise in sie eingesteckt), welches den Feststellmechanismus derartig betätigen kann, dass sich bei Betätigung des Feststellmechanismus das Gegenlager in Zuspannrichtung bis zu einer benachbarten Feststellposition weiterdreht und sich dort wieder feststellt.

Die Position des Auslöseelementes an der Spindel ist dabei vorteilhafterweise derart gewählt, dass bei einer vollen Zuspannung der Bremse der Feststellmechanismus durch das Auslöseelement gerade noch nicht ausgelöst wird. Führt nun ein Verschleißen der Bremsbeläge dazu, dass sich die Spindel für die vollständige Zuspannung der Bremse in Zuspannrichtung ein Stück weiter drehen muss, so betätigt dann das Auslöseelement den Feststellmechanismus und führt zu einer Drehung des Gegenlagers in Zuspannrichtung und damit zu seiner Arretierung in einer benachbarten Feststell- bzw. Arretierungsposition. Beim erneuten Zuspannen der Bremse dreht sich die Spindel nun wieder so weit, dass das Auslöseelement den Feststellmechanismus gerade noch nicht betätigt. Dies setzt sich bei weiterem Verschleiß der Bremsbeläge fort. Auf diese Art - durch das Nachführen des Gegenlagers - wird auch sichergestellt, dass bei zunehmendem Verschleiß der Bremsbeläge sich die im Energiespeicher gespeicherte Energiemenge nicht erhöht. Unabhängig vom Zustand der Bremsbeläge wird somit im Energiespeicher eine bekannte bzw. vorgegebene Energiemenge gespeichert.

Das Auslöseelement kann beispielsweise als Bolzen ausgestaltet sein, der an der Spindel beispielsweise angeschweißt oder in diese eingesteckt ist und von dieser im Wesentlichen senkrecht absteht. Vorteilhafterweise ist der Energiespeicher bzw. Speicher durch das Auslöseelement an die Spindel gekoppelt. Bei Verwendung einer Spiralfeder als Energiespeicher kann diese beispielsweise an ihrem äußeren Ende an den Bolzen, beispielsweise mittels einer Öse, eingehängt sein. Weiterhin kann das Gegenlager einen Anschlag aufweisen, beispielsweise direkt für das Auslöseelement oder auch für eine Öse einer Spiralfeder dergestalt, dass bei einem Drehen der Spindel entgegengesetzt zur Zuspannrichtung (z. B. bei einem Belagwechsel) das Auslöseelement oder das daran befestigte Ende des Energiespeichers zu einem gewissen Zeitpunkt den Anschlag berührt und bei weiterem Drehen der Spindel das Gegenlager mitführt, so dass sich ab diesem Zeitpunkt Spindel und Gegenlager synchron miteinander entgegengesetzt zur Zuspannrichtung drehen. Auf diese Weise wird gewissermaßen beim Drehen der Spindel entgegengesetzt zur Zuspannrichtung eine Freilauffunktionalität bereitgestellt: Während in Zuspannrichtung ein Weiterdrehen des Gegenlagers nur über Betätigung des Feststellmechanismus (dieser kann beispielsweise als Rastmechanismus ausgestaltet sein) möglich ist, ist das Verdrehen des Gegenlagers entgegengesetzt zur Zuspannrichtung leicht möglich aufgrund einer Freilaufcharakteristik des Feststellmechanismus (bzw. des Rastmechanismus).

Um die oben beschriebene Funktionalität zu erfüllen, kann der Feststellmechanismus auf unterschiedliche Arten ausgestaltet werden. In einer bevorzugten Ausführungsform umfasst der Feststellmechanismus ein mit dem Gegenlager verbundenes Rastelement mit einer Klinke, welches bei Betätigung durch die Klinke in einer benachbarten Rastposition in eine Rastkontur einrastet. Das heißt, dass das Auslöseelement beim Drehen der Spindel in Zuspannrichtung gewissermaßen auf die Klinke drückt oder diese verschiebt, so dass sich das Gegenlager bzw. das mit dem Gegenlager verbundene Rastelement für kurze Zeit aus der Rastkontur löst. Auf Grund der im Energiespeicher gespeicherten Energie, beispielsweise durch die Spannung in einer Feder, wird das drehbar gelagerte Gegenlager in Zuspannrichtung weiter gedreht, bis das Rastelement in einer benachbarten Rastposition einer Rastkontur einrastet. Der Feststellmechanismus kann konstruktiv derart gestaltet werden, dass dabei keine Rastposition übersprungen wird (mechanische Zwangsführung).

Das Gegenlager des Speichers stützt sich gewissermaßen über einen Rastmechanismus ab, welcher in mehreren Positionen, die durch Eingriffe in einer Rastkontur ausgestaltet sind, sperren kann. In Abhängigkeit vom zurückgelegten Winkel/ Drehmoment (beispielsweise bei Verschleiß der Bremsbeläge) wird der Rastmechanismus bzw. der Feststellmechanismus ausgelöst, welcher das Gegenlager des Speichers aus dem Eingriff der Rastkontur bringt. Beim Auslösen des Feststellmechanismus gibt der Speicher gewissermaßen mechanische Energie frei - im Falle einer Spiralfeder entspannt sich diese ein Stück weit - und der Rastmechanismus wird zurückgedreht, bis er in der nächsten Position wieder einrastet. Durch eine Zwangsführung des Rastmechanismus kann sichergestellt werden, dass bei dessen Auslösung keine Rastposition übersprungen wird.

Unter Verwendung einer Rastkontur kann der Feststellmechanismus auch mit einem mit dem Gegenlager verbundenen Federhaken realisiert werden, welcher in Eingriffe einer Rastkontur greift. Der Federhaken kann dabei beispielsweise einen Vorsprung aufweisen, der derart ausgestaltet ist, dass das Auslöseelement beim Drehen der Spindel in Zuspannrichtung unter diesen Vorsprung fährt und dadurch den Federhaken aus der Rastkontur heraushebt. Hat sich der Federhaken aus der Rastkontur gelöst, dreht sich das Gegenlager so lange, bis der Federhaken wieder in der benachbarten Rastposition bzw. dem korrespondierenden Eingriff eingreift und auf diese Weise das Gegenlager wieder arretiert wird.

Der Feststellmechanismus kann auch mit einer Anzahl von Kugelrasten, die jeweils eine Kugel und eine Feder aufweisen, realisiert werden, die im Verhältnis zur Spindel räumlich fest angeordnet werden und von denen jeweils wenigstens eine in einer Feststellposition in eine Rastposition (ein Eingriff bzw. eine Mulde) einer mit dem Gegenlager verbundenen oder damit integrierten Rastkontur greift. Die jeweiligen Kugeln werden dabei beispielsweise durch eine Feder gegen die Rastkontur gedrückt. Die Rastkontur weist beispielsweise Vertiefungen auf, zwischen denen jeweils Kreissegmente liegen. Das Gegenlager umfasst bei einer derartigen Ausführungsform vorzugsweise eine Ausnehmung für das Auslöseelement, bei dessen Kontakt das Auslöseelement das Gegenlager in Zuspannrichtung dreht. Dabei wird die entsprechende Kugel aus der Mulde herausgedrückt und das Gegenlager dreht sich auf Grund der im Speicher gespeicherten Energie weiter, bis die Kugel in der nächsten Mulde einrastet. Dazu kann das Gegenlager beispielsweise eine kreissegmentförmige Aussparung aufweisen, in der sich im normalen Betriebszustand das Auslöseelement, beispielsweise ein Bolzen, frei bewegt. Bei einem Verschleiß der Bremsbeläge beispielsweise drückt dann das Auslöseelement gegen ein Ende der Aussparung bzw. greift darin ein, wodurch das Gegenlager aus seiner Rastposition gelöst wird und daraufhin in die nächste Rastposition einrastet.

Die Rastkontur kann dabei eine Vielzahl von Mulden aufweisen, wobei bei der Verwendung von mehreren Kugelrasten auch in einer Rastposition Kugeln zwischen den Mulden auf der Rastkontur in den kreissegmentartigen Abschnitten aufliegen können. Auf diese Weise kann bei gleichbleibender Anzahl von Mulden durch die Erhöhung der Kugelrasten die Auflösung verbessert bzw. der Winkel, den sich das Gegenlager von Rastposition zu Rastposition weiterdreht, verkleinert werden.

In einer weiteren bevorzugten Ausführungsform weist der Feststellmechanismus eine Feder auf, die sich in eine sie umgegebene Feststellkontur hineindrückt und die an ihrem einen Ende eine Schlinge oder Öse zur Aufnahme des Auslöseelementes aufweist. Die Feder drückt sich gewissermaßen in der Art einer Trommelbremse nach außen in eine Kontur, wobei durch die Reibung zwischen Feder und Kontur das Gegenlager arretiert wird. Wird nun die Spindel in Zuspannrichtung so weit gedreht, dass das Auslöseelement in die Schlinge bzw. Öse der Feder greift, wird dadurch die Feder gespannt und teilweise von der Rastkontur gelöst, so dass sich auf Grund der Federspannung die Feder in Zuspannrichtung innerhalb der Rastkontur verdreht, bis die Feder wieder ihrer neuen Lage gegen die Rastkontur drückt und das Gegenlager arretiert bzw. in seiner Position hält. Die Feder ist dabei vorteilhafterweise als Spiralfeder oder Schlingfeder ausgeführt, wobei zwischen der Feder und der sie umhüllenden Feststellkontur ein Reibbelag vorgesehen sein kann, durch den die Feststellwirkung noch verbessert werden kann.

Die Feder, die die oben genannte Funktion in der Art einer Trommelbremse bereitstellt, und die Spiralfeder, die als Energiespeicher fungiert und im stromlosen Zustand der Bremse gewissermaßen eine "Rückdrehfunktion" realisiert, können auch als ein einzelnes Bauteil ausgeführt sein. Dazu kann beispielsweise das äußere Ende der Spiralfeder als Schlingfeder ausgestaltet sein, die sich in eine sie umgebende Feststellkontur hineindrückt und damit eine kraftschlüssige Verbindung zum Gegenlager herstellt.

In Bezug auf das Verfahren wird die oben genannte Aufgabe gelöst, indem zum Bereitstellen der Bremse in einem Bereitschaftszustand die Spindel um einen vorgegebenen Bereitschaftswinkel in Zuspannrichtung durch den Elektromotor gedreht wird und wobei die Spindel zum Zuspannen um einen vorgegebenen Zuspannwinkel weiter in Zuspannrichtung gedreht wird. Durch das Drehen der Spindel um einen vorgegebenen Bereitschaftswinkel in Zuspannrichtung bereits zum Erlangen des Bereitschaftszustandes der Bremse wird in den Speicher bereits zu diesem Zeitpunkt Energie gespeichert. Dadurch kann sichergestellt werden, dass auch bei einem Fehlerfall in den Bereitschaftszustand, beispielsweise bei einem Stromausfall bzw. Ausfall des Bordnetzes, durch die im Speicher gespeicherte Energie die Spindel ein gewisses Stück zurückgedreht wird, so dass sichergestellt wird, dass sich die Bremsbeläge von der Bremsscheibe gelöst haben. Der Elektromotor muss also auch im Bereitschaftsmoment permanent ein kleines Drehmoment zur Verfügung stellen, um die Spindel in dieser Position zu halten.

Ausgehend von diesem Bereitschaftszustand wird zum Zuspannen der Bremse die Spindel weiter um einen vorgegebenen Zuspannwinkel gedreht. Ein derartiger Mechanismus lässt sich vorteilhaft bei Scheibenbremsen verwenden, es sind aber auch andere Anwendungen denkbar, bei denen Bremsbeläge gegen ein entsprechendes Bremselement gedrückt werden. In einer vorteilhaften Ausführungsform des Verfahrens bei einer Bremse mit einem mit der Spindel verbundenen Auslöseelement und mit einem mit dem Gegenlager verbundenen Anschlag wird zum Wechsel der Bremsbeläge die Spindel entgegen der Zuspannrichtung gedreht, wobei das Auslöseelement direkt oder indirekt gegen den Anschlag drückt, wodurch sich Spindel und Gegenlager synchron miteinander drehen. Bei einem Belagwechsel soll die Spindel entgegen der Zuspannrichtung maximal zurückgefahren werden. Das Auslöseelement drückt dabei direkt gegen den Anschlag des Gegenlagers. Dadurch wird gewissermaßen eine Freilauffunktion dargestellt. Der Energiespeicher verbleibt dabei in seiner werksseitigen Vorspannung. Der Feststellmechanismus sollte dabei so ausgestaltet sein, dass sich bei diesem Verfahrensschritt das Gegenlager ohne nennenswerte Widerstände entgegengesetzt zur Zuspannrichtung drehen lässt.

Die Vorteile der Erfindung liegen insbesondere darin, dass durch ein drehbar gelagertes Gegenlager des Energiespeichers eine elektromechanische Bremse bereitgestellt wird, bei der im Fehlerfall zuverlässig und reproduzierbar ohne externe elektrische Stromversorgung ein Zuspannelement, insbesondere ein Kolben, zurückgefahren und dadurch die Bremse gelöst wird. Durch einen Feststellmechanismus für das Gegenlager, der durch ein mit der Spindel verbundenes Auslöseelement betätigt wird, wird eine automatische Nachjustierung des Gegenlagers ermöglicht.

Ein Ausführungsbeispiel der Erfindung wird anhand einer Zeichnung näher erläutert. Darin zeigen in stark schematisierter Ansicht:
- FIG. 1: eine elektrisch betätigbare Bremse mit einem Elektromotor, einem Getriebe, einer Spindel, einem Kolben sowie einem als Spiralfeder ausgestalteten mechanischen Speicher,
- FIG. 2: eine Vorderansicht der Bremse aus FIG. 1 mit einer Spiralfeder, einem Gegenlager und einem Feststellmechanismus,
- FIG. 3: zwei Ausführungsformen von Kugelrasten für einen Feststellmechanismus gemäß FIG. 4.
- FIG. 4: einen Feststellmechanismus in einer ersten bevorzugten Ausführungsform mit Kugelrasten,
- FIG. 5: einen Feststellmechanismus in einer zweiten bevorzugten Ausführungsform mit einem Federhaken und einer Rastkontur,
- FIG. 6: einen Feststellmechanismus in einer dritten bevorzugten Ausführungsform mit einer Feder,
- FIG. 7: eine Vorderansicht der Bremse aus FIG. 2 im stromlosen Zustand,
- FIG. 8: eine Vorderansicht der Bremse aus FIG. 2 in einem Bereitschaftszustand, und
- FIG. 9: eine Vorderansicht der Bremse aus FIG. 2 in einem voll zugespannten Zustand.

Gleiche Teile sind in allen Figuren mit den gleichen Bezugszeichen versehen.

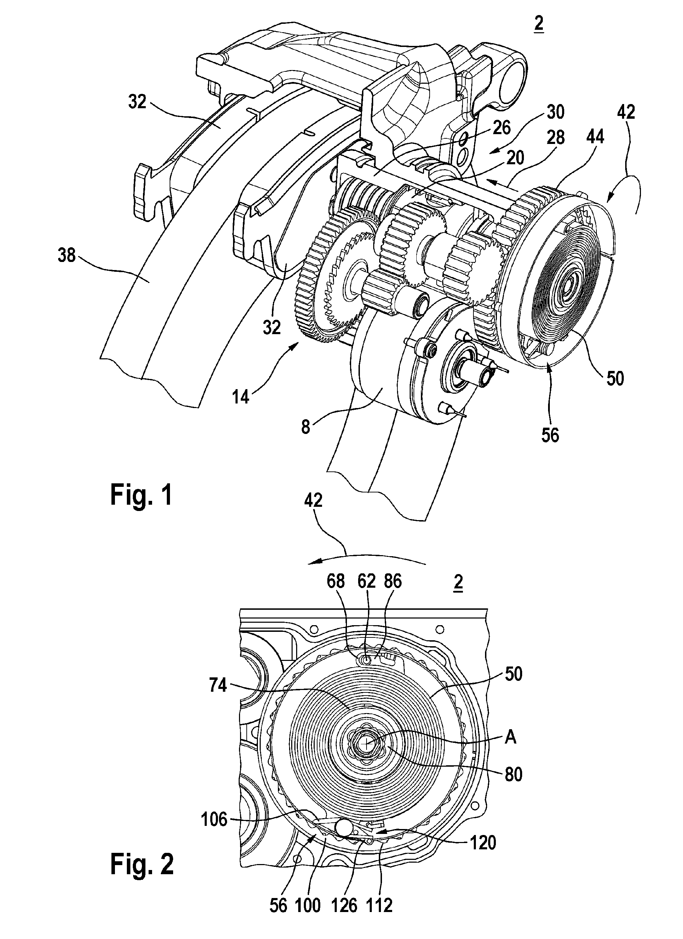

Bei der in FIG. 1 dargestellten elektromechanisch betätigbaren Bremse (EMB) 2 treibt ein Elektromotor 8 über ein hoch übersetzendes Getriebe 14 eine als Kugelumlaufspindel ausgestaltete Spindel 20 an, welche ein als Kolben ausgestaltetes Zuspannelement 26 linear in Hubrichtung 28 bewegt. Die Spindel 20 und das Zuspannelement 26 sind Teile eines elektrisch betätigbaren Aktuators 30, der eine rotatorische Bewegung der Spindel 20 in eine translatorische Bewegung des Zuspannelementes 26 umsetzt. Im vorliegenden Ausführungsbeispiel ist die EMB 2 als Scheibenbremse für ein Kraftfahrzeug ausgestaltet, bei der durch Bewegung der Spindel 20 in Hubrichtung 28 Bremsbeläge 32 gegen eine Bremsscheibe 38 gedrückt werden. Dieser Vorgang wird auch als Zuspannen der Bremse 2 bezeichnet. Die Spindel 20 muss dabei - ausgehend von maximal geöffneter Position - je nach Gewindesteigung und Verschleißzustand der Bremsbeläge 32 und der Bremsscheibe 38 mehrere Umdrehungen machen, um Bremskraft aufzubauen. Mit der Spindel 20 fest verbunden ist ein Zahnrad 44, über das als Teil des Getriebes 14 die Spindel 20 zum Zuspannen der Bremse 2 in Zuspannrichtung 42 durch den Elektromotor 8 gedreht wird.

In FIG. 1 sind weiterhin sichtbar eine Spiralfeder 50, die als mechanischer Speicher fungiert und bei Verdrehung der Spindel 20 in Zuspannrichtung 42 Energie aufnimmt, sowie ein Feststellmechanismus 56 für das in FIG. 1 nicht sichtbare Gegenlager 80 der Spiralfeder 50. Die Spiralfeder 50 ist mit ihrem ersten bzw. äußeren Ende 68, wie in FIG. 2 dargestellt, in einem mit der Spindel 20 fest verbundenen Bolzen 62 an die Spindel 20 gekoppelt. Im vorliegenden Fall ist die Spiralfeder 50 in dem Bolzen 62 mit einer am äußeren Ende 68 befindlichen Öse eingehängt. Das zweite bzw. innere Ende 74 der Spiralfeder 50 ist mit dem Gegenlager 80 gekoppelt. Diese Kopplung kann durch eine kraft- oder formschlüssige Verbindung, beispielsweise Einhängung, Einsteckung oder auch ein Verschweißen oder Vernieten erreicht werden. Das Gegenlager 80 ist als drehbare Scheibe ausgestaltet. Spindel 20, Spiralfeder 50 sowie Gegenlager 80 sind koaxial in Bezug auf die Achse A ausgerichtet. An dem Gegenlager 80 ist weiterhin ein Anschlag 86 angebracht, an das der Bolzen 62 bzw. das äußere Ende 68 der Spiralfeder bei ihrer Bewegung entgegengesetzt zur Zuspannrichtung 42 bei einem gewissen Drehwinkel anschlagen.

Die elektromechanisch betätigbare Bremse 2 ist dazu ausgelegt, unabhängig von der Position der Spindel 20 beim maximalen Zuspannen der Bremse 2 bzw. unabhängig von dem Verschleißzustand der Bremsbeläge 32 bzw. der Bremsscheibe 38 eine definierte Energiemenge zur Zurückdrehung der Spindel 20 und Loslösung der Bremse 2 bereitzustellen. Dazu ist ein Feststellmechanismus 56 vorgesehen, durch den das Gegenlager 80 in einer Mehrzahl von Positionen arretiert werden kann. Dazu ist ein mit dem als Scheibe ausgestalteten Gegenlager 80 verbundenes Rastelement 120 vorgesehen, welches einen Bügel 126 umfasst, der in einer Feststellposition in eine Mulde 112 bzw. einen Eingriff der Rastkontur 100 greift.

Durch ein Herunterdrücken der Klinke 106 wird der Bügel 126 aus einer Mulde 112 der Rastkontur 100 gehoben. Auf Grund der Spannung der Spiralfeder 50 dreht sich in diesem Fall das Gegenlager 80 in Zuspannrichtung 42 genau eine Rastposition weiter, bis der Bügel 126 in einer in Zuspannrichtung 42 benachbarten Mulde 112 wieder einrastet. Die Betätigung der Klinke 106 erfolgt beispielsweise dann, wenn der Bolzen 62 und das äußere Ende 68 der Feder sich beim Zuspannen der Bremse 2 in Zuspannrichtung 42 entsprechend weit bewegen. Durch den Feststellmechanismus 56 wird also erreicht, dass sich bei größer werdendem Drehwinkel der Spindel 20 in Zuspannrichtung 42 beispielsweise bei Verschleiß der Bremsbeläge das Gegenlager 80 derart nachadjustiert, dass auch in dieser neuen Position die beim Zuspannen der Bremse 2 im als Spiralfeder 50 ausgestalteten Energiespeicher gespeicherte Energie im Wesentlichen die gleiche Größe hat wie die gespeicherte Energie in der vorherigen Position.

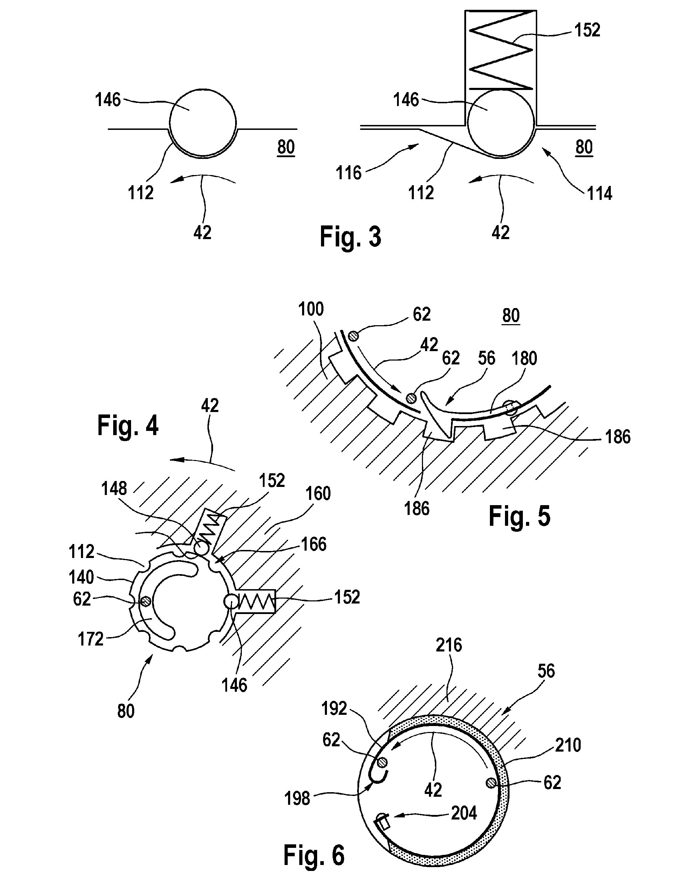

Eine vorteilhafte Ausgestaltung des Feststellmechanismus 56 ist in FIG. 4 dargestellt. Das Gegenlager 80 umfasst dabei an seinem äußeren Rand eine Reihe von Mulden 112 bzw. Eingriffen und dazwischen liegenden Stegen 140. Dabei greifen an Federn 152 fest mit einem Gehäuse 160 der Bremse 2 verbundene Kugeln 146, 148 jeweils in die Mulden 112 bzw. liegen auf den Stegen 140 auf. Im vorliegend dargestellten Beispiel wird die Kugel 146 durch die Feder 152 in eine Mulde gedrückt, während die Kugel 148 auf einem Steg 140 aufliegt.

Bei einem Weiterdrehen des Gegenlagers 80 in Zuspannrichtung 42 wird die Kugel 148 in der Rastposition 166 in der entsprechenden Mulde 112 einrasten bzw. durch die Feder 152 in diese gedrückt, während die Kugel 146 auf einem Steg zum Liegen kommt. Gegenüber einer Version mit nur einer Kugel ist damit die Anzahl der Rastpositionen verdoppelt. Die Bewegung des Gegenlagers 80 kann dabei beispielsweise durch eine Ausnehmung 172 erfolgen, in der sich im normalen Betrieb der Bolzen 62 bewegt. Schlägt der Bolzen 62 an das Ende der Ausnehmung 172 an, wird dadurch das Gegenlager 80 in Zuspannrichtung 42 gedreht.

Zwei unterschiedliche Ausführungsformen der Mulden 112 sind in FIG. 3 schematisch dargestellt. Die im linken Teil der FIG. 3 dargestellte Mulde 112 hat eine im Wesentlichen halbkreisförmige, in Bezug auf ihren tiefsten Punkt symmetrische Ausgestaltung bzw. Formgebung. Sie kann eine Kugel 146 aufnehmen und dadurch eine Feststellung bzw. Arretierung des Gegenlagers 80 realisieren. Bei dieser Ausgestaltung der Mulde 112 ist aufgrund der symmetrischen Ausgestaltung der Mulde 112 eine Bewegung des Gegenlagers 80 entgegengesetzt zur Zuspannrichtung 42 gegenüber einer Bewegung in Zuspannrichtung 42 nicht erleichtert, so dass in diesem Fall eine Freilauffunktionalität nicht realisiert ist.

Eine derartige Funktionalität ist dagegen bei der im rechten Teil der FIG. 3 dargestellten Mulde 112 gegeben. Während hier die Mulde 112 in einem ersten Bereich 114 kreissegmentartig ausgestaltet ist, ist sie in einem zweiten Bereich 116 linear und im Wesentlichen ohne Krümmung geformt. Dadurch wird bei einer Bewegung des Gegenlagers 80 entgegengesetzt zur Zuspannrichtung 42 der Kugel 146 nur ein sehr geringer Widerstand entgegengesetzt, so dass das Gegenlager 80 in dieser Richtung im Wesentlichen frei laufen kann. Bei einer Drehung des Gegenlagers 80 in dieser Richtung wird die Kugel 146 jeweils durch die Feder 152 in die entsprechende Mulde 112 gedrückt und kann dann bei einer weiteren Drehung in dem zweiten Bereich 116 der Mulde 112 gewissermaßen nach oben gleiten. Dies gilt natürlich auch für Ausführungen des Feststellmechanismus 56 mit mehreren Kugelrasten.

Eine weitere vorteilhafte Ausgestaltung des Feststellmechanismus 56 ist in FIG. 5 dargestellt. Dabei greift ein Federhaken 180 in Eingriffe 186 der Rastkontur 100. Bei einer Bewegung der Spindel 20 in Zuspannrichtung 42 kann der Federhaken 180 durch den Bolzen 62 aus einem Eingriff 186 herausgehoben werden, wodurch sich das Gegenlager 80 in Zuspannrichtung 42 so lange weiterdreht, bis der Federhaken 180 in den benachbarten Eingriff 186 eingreift und das Gegenlager 80 in seiner Position verriegelt. Je nach gewünschtem Auflösungsvermögen kann die Anzahl der Eingriffe 186 in der Rastkontur gegenüber dem dargestellten Beispiel vergrößert bzw. verkleinert werden. Bei dieser Ausführungsform des Feststellmechanismus 56 ist eine Freilauffunktion des Gegenlagers 80 durch die Ausgestaltung des Federhakens 180 realisiert, welcher bei einer Drehung entgegengesetzt zur Zuspannrichtung 42 aus den jeweiligen Eingriffen 186 herausgleitet.

Während bei den bisherigen Ausführungsformen des Feststellmechanismus 56 eine Arretierung bzw. Feststellung des Gegenlagers 80 in diskreten Feststellpositionen ermöglicht wird, kann alternativ dazu auch ein Feststellmechanismus 56 vorgesehen sein, der eine im Prinzip kontinuierliche Variation der Feststellposition erlaubt. Dazu ist, wie in FIG. 6 dargestellt, eine Feder 192 vorgesehen, die als Spiralfeder oder Schlingfeder ausgestaltet sein kann (im vorliegenden Fall als Spiralfeder), die an ihrem einen Ende eine Öse zur Aufnahme des Bolzens 62 aufweist. Die Feder 192 weist weiterhin ein Endstück 204 auf, welches mit dem Gegenlager 80 verbunden ist. Wird die Spindel 20 entsprechend weit in Zuspannrichtung 42 gedreht, greift der Bolzen 62 in die Öse 198, dehnt dadurch die Feder 192 und löst sie von einem zwischen Feder 192 und einer Feststellkontur 216 liegenden Reibbelag 210 teilweise ab. Dadurch rutscht das Endstück 204 der Feder 192 entlang des Reibbelages 210 in Zuspannrichtung 42, bis die Spannung der Feder 192 wieder ungefähr den vorherigen Wert erreicht hat, und sich die Feder 192 wieder an den Reibbelag 210 drückt, wodurch eine Arretierung bzw. Feststellung des Gegenlagers 80 erreicht wird. Dazu müssen die Feder 192 und die Spiralfeder 50 bzw. der mechanische Speicher hinsichtlich ihrer Spannkraft aufeinander abgestimmt sein. Die Verwendung eines Reibbelags 210 sorgt gewöhnlich für eine größere Reibung zwischen Feder 192 und einer vorzugsweise aus Metall gefertigten Feststellkontur 216. Das Material des Reibbelags sollte derart gewählt werden, dass es während der gesamten Lebenszeit der Bremse 2 einen im Wesentlichen konstanten Reibwert liefert. Je nach Auslegung der Federstärken von Spiralfeder 50 und Feder 192 kann auch auf die Verwendung eines Reibbelags 210 verzichtet werden. Auch bei dieser Realsierung des Feststellmechanismus ist eine Freilauffunktion realisiert, da sich die Feder 192 bei einer Bewegung des Gegenlagers 80 entgegengesetzt zur Zuspannrichtung 42 nicht oder nur äußerst geringfügig in die Feststellkontur 216 drückt.

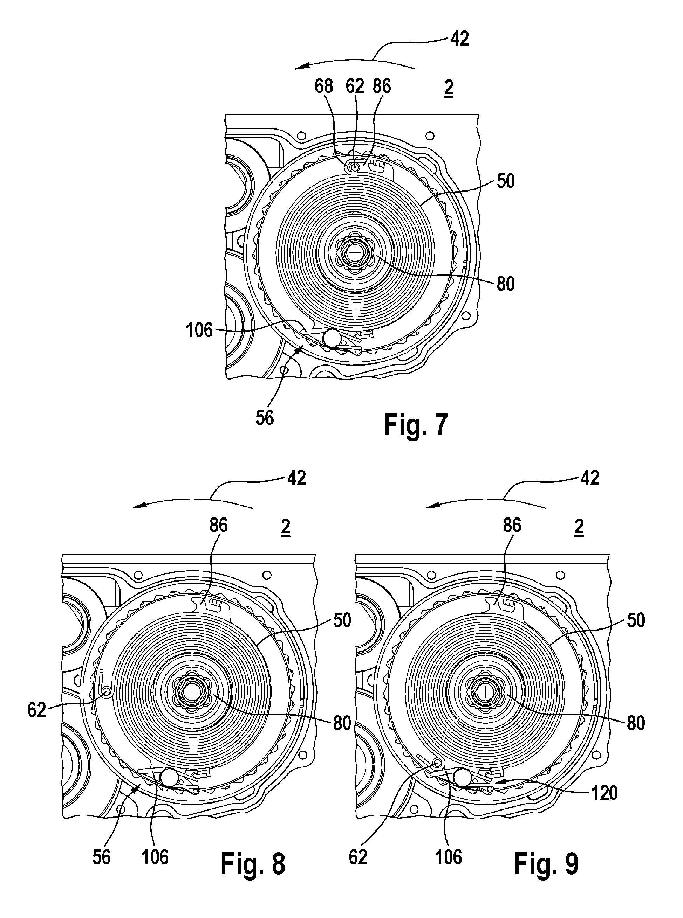

Die FIG. 7, 8 und 9 zeigen die EMB 2 aus FIG. 2 in unterschiedlichen Betriebszuständen. FIG. 7 zeigt die Bremse 2 im stromlosen Zustand. Die Spiralfeder 50 drückt durch ihre werkseitige Vorspannung den Bolzen 62 und ihr äußeres Ende 68 entgegengesetzt zur Zuspannrichtung 42 gegen den Anschlag 46.

In FIG. 8 befindet sich die Bremse 2 in einem Bereitschaftszustand. Dieser Betriebszustand entspricht dem gewöhnlichen Fahrbetrieb eines Kraftfahrzeuges. Der Bolzen 62 befindet sich dabei etwa in der Mitte zwischen Anschlag 86 und Klinke 106 des Feststellmechanismus 56. Bei ordnungsgemäßer Funktion der Bremse 2 muss der Elektromotor 8 daher permanent ein kleines Drehmoment zur Verfügung stellen, um die Bremse 2 gegen das Rückdrehmoment der Spiralfeder 50 in dieser Position zu halten. Ausgehend vom stromlosen Zustand (FIG. 7) wird somit zum Bereitstellen der Bremse in einem Bereitschaftszustand die Spindel 20 um einen vorgegebenen Bereitschaftswinkel in Zuspannrichtung 42 durch den Elektromotor 8 gedreht. Fällt bei einem Betriebszustand der Bremse 2 gemäß FIG. 8 der Strom aus, wird die Spindel 20 durch die in der Spiralfeder 50 gespeicherte Energie so lange entgegengesetzt der Zuspannrichtung 42 gedreht, bis der Bolzen 62 bzw. das Äußere Ende 68 der Spiralfeder 50 am Anschlag 86 anliegen.

Beim Zuspannen der Bremse 2 wird die Spindel 20, ausgehend von FIG. 8, noch weiter in Zuspannrichtung 42 um einen Zuspannwinkel gedreht. Die in FIG. 9 dargestellte Position des Bolzens 62 entspricht dem Zustand der voll zugespannten Bremse 2. In dem Fall, dass zum vollen Zuspannen der Bremse noch eine weitere Drehung der Spindel 20 in Zuspannrichtung 42 notwendig ist, drückt der Bolzen 62 die Klinke 106 herunter, wodurch auf Grund der Spannung der Spiralfeder 50 das Rastelement 120 in einer in Zuspannrichtung 42 benachbarten Rastposition wieder einrastet. In dieser neuen Ausgangslage von Bolzen 62, Feststellmechanismus 56, Spindel 20 und Gegenlager 80 ist wieder eine zum vorherigen Zustand äquivalente Positionierung der genannten Komponenten zueinander sichergestellt, so dass im Notlösefall wieder die gewünschte vorgegebene Energiemenge in der Spiralfeder 50 zum Lösen der Bremsbeläge 32 von der Bremsscheibe 38 zur Verfügung steht.

### Bezugszeichenliste

- 2: elektromechanische Bremse
- 8: Elektromotor
- 14: Getriebe
- 20: Spindel
- 26: Zuspannelement
- 28: Hubrichtung
- 30: Aktuator
- 32: Bremsbelag
- 38: Bremsscheibe
- 42: Zuspannrichtung
- 44: Zahnrad
- 46: Anschlag
- 50: Spiralfeder
- 56: Feststellmechanismus
- 62: Bolzen
- 68: äußeres Ende
- 74: inneres Ende
- 80: Gegenlager
- 86: Anschlag
- 92: Feder
- 100: Rastkontur
- 106: Klinke
- 112: Mulde
- 114: erster Bereich
- 116: zweiter Bereich
- 120: Rastelement
- 126: Bügel
- 140: Steg
- 146: Kugel
- 148: Kugel
- 152: Feder
- 160: Gehäuse
- 166: Rastposition
- 172: Ausnehmung
- 180: Federhaken
- 186: Eingriff
- 192: Feder
- 198: Öse
- 204: Endstück
- 210: Reibbelag
- 216: Feststellkontur

- A: Achse

## Patentansprüche

1. Elektromechanisch betätigbare Bremse (2) mit einem elektrisch betätigbaren Aktuator (30) zum Zuspannen der Bremse (2) in einer Zuspannrichtung (42), der eine rotatorische Bewegung einer Spindel (20) in eine translatorische Bewegung eines Zuspannelementes (26), insbesondere eines Kolbens, umsetzt, wobei die Spindel (20) von einem Elektromotor (8) angetrieben wird, wobei ein mechanischer Speicher zur Energiespeicherung durch Verdrehen vorgesehen ist, dessen erstes Ende mit der Spindel (20) gekoppelt ist und dessen zweites Ende mit einem Gegenlager (80) gekoppelt ist, wobei der Speicher beim Drehen der Spindel (20) in Zuspannrichtung (42) Energie aufnimmt, durch die im stromlosen Zustand des Elektromotors (8) die Spindel (20) entgegengesetzt zur Zuspannrichtung (42) zurückgedreht wird, wodurch die Bremse (2) gelöst wird, **dadurch gekennzeichnet, dass** das Gegenlager (80) drehbar gelagert ist und in einer Mehrzahl von diskret oder kontinuierlich angeordneten Feststellpositionen feststellbar ist.

2. Bremse (2) nach Anspruch 1, wobei der Speicher als Spiralfeder (50) ausgestaltet ist.

3. Bremse (2) nach Anspruch 1 oder 2, wobei das Gegenlager (80) als Scheibe ausgestaltet ist.

4. Bremse (2) nach einem der Ansprüche 1 bis 3 mit einem durch ein mit der Spindel (20) verbundenes Auslöseelement betätigbaren Feststellmechanismus (56), dessen Betätigung zu einer Drehung des Gegenlagers (80) in Zuspannrichtung (42) und zu einer Feststellung in einer benachbarten Feststellposition führt.

5. Bremse (2) nach Anspruch 4, wobei das Auslöseelement als Bolzen (62) ausgestaltet ist.

6. Bremse (2) nach Anspruch 4 oder 5, wobei der Speicher durch das Auslöseelement an die Spindel (20) gekoppelt ist.

7. Bremse (2) nach einem der Ansprüche 5 bis 6, wobei das Gegenlager (80) einen Anschlag (46)aufweist.

8. Bremse (2) nach einem der Ansprüche 4 bis 7, wobei der Feststellmechanismus (56) ein mit dem Gegenlager (80) verbundenes Rastelement (120) mit einer Klinke (106) umfasst, das bei Betätigung durch die Klinke (106) in einer benachbarten Rastposition (166) einer Rastkontur (100) einrastet.

9. Bremse (2) nach einem der Ansprüche 4 bis 7, wobei der Feststellmechanismus (56) einen mit dem Gegenlager (80) verbundenen Federhaken (180) aufweist, der in eine Rastkontur (100) greift.

10. Bremse (2) nach einem der Ansprüche 4 bis 7, wobei der Feststellmechanismus (56) eine Anzahl von Kugelrasten aufweist, von denen jeweils wenigstens eine in einer Festellposition in eine Rastposition (166) einer mit dem Gegenlager (80) verbundenen oder damit integrierten Rastkontur (100) greift.

11. Bremse (2) nach einem der Ansprüche 4 bis 7, wobei der Feststellmechanismus (56) eine Feder (192) aufweist, die sich in eine sie umgebende Feststellkontur (216) hineindrückt, und die an ihrem einen Ende eine Schlinge zur Aufnahme des Auslöselementes aufweist.

12. Bremse (2) nach Anspruch 11, wobei die Feder (192) als Spiralfeder oder Schlingfeder ausgeführt ist.

13. Bremse (2) nach Anspruch 11 oder 12, wobei zwischen der Feder (192) und der sie umhüllenden Feststellkontur (216) ein Reibbelag (210) vorgesehen ist.

14. Bremse (2) nach einem der Ansprüche 11 bis 13, wobei der Speicher als Spiralfeder (50) ausgestaltet ist und wobei Spiralfeder (50) und Feder (192) als einstückiges Bauteil gefertigt sind.

15. Verfahren zum Betreiben einer elektromechanisch betätigbaren Bremse (2) mit einem elektrisch betätigbaren Aktuator (30) zum Zuspannen der Bremse (2) in Zuspannrichtung (42), der eine rotatorische Bewegung einer Spindel (20) in eine translatorische Bewegung eines Zuspannelementes (26), insbesondere eines Kolbens, umsetzt, wobei die Spindel (20) von einem Elektromotor (8) angetrieben wird, **dadurch gekennzeichnet, dass** zum Bereitstellen der Bremse (2) in einem Bereitschaftszustand die Spindel (20) um einen vorgegebenen Bereitschaftswinkel in Zuspannrichtung (42) durch den Elektromotor (8) gedreht wird, und wobei die Spindel (20) zum Zuspannen um einen vorgegebenen Zuspannwinkel weiter in Zuspannrichtung (42) gedreht wird.

16. Verfahren nach Anspruch 15 mit einer Bremse (2) mit einem mit der Spindel (20) verbundenen Auslöseelement und einem mit dem Gegenlager (80) befestigten Anschlag (46), wobei zum Wechsel der Bremsbeläge die Spindel (20) entgegen der Zuspannrichtung (42) gedreht wird, und wobei das Auslöseelement gegen den Anschlag (46) gedrückt wird, wodurch sich Spindel (20) und Gegenlager (80) synchron miteinander drehen.

## Claims

1. Electromechanically actuatable brake (2), comprising an electrically actuatable actuator (30) for applying the brake (2) in an application direction (42), which actuator (30) converts a rotary motion of a spindle (20) into a translational motion of an application element (26), in particular a piston, wherein the spindle (20) is driven by an electric motor (8), wherein a mechanical store for storing energy by twisting is provided, the first end of which store is coupled to the spindle (20) and the second end to a bracing element (80), wherein the store takes up energy during rotation of the spindle (20) in the application direction (42), by which energy the spindle (20) is rotated back against the application direction (42) in the currentless state of the electric motor (8), whereby the brake (2) is released, **characterized in that** the bracing element (80) is mounted rotatably and can be fixed in a plurality of discretely or continuously arranged fixing positions.

2. Brake (2) according to Claim 1, wherein the store is in the form of a spiral spring (50).

3. Brake (2) according to Claim 1 or 2, wherein the bracing element (80) is in the form of a disk.

4. Brake (2) according to any one of Claims 1 to 3, having a fixing mechanism (56) which can be actuated by a triggering element connected to the spindle (20), actuation of which fixing mechanism (56) leads to rotation of the bracing element (80) in the application direction (42) and to fixing thereof in an adjacent fixing position.

5. Brake (2) according to Claim 4, wherein the triggering element is in the form of a pin (62).

6. Brake (2) according to Claim 4 or 5, wherein the store is coupled to the spindle (20) by the triggering element.

7. Brake (2) according to any one of Claims 5 to 6, wherein the bracing element (80) has a stop (46).

8. Brake (2) according to any one of Claims 4 to 7, wherein the fixing mechanism (56) includes a latching element (120) which is connected to the bracing element (80) and has a catch (106), which latching element (120) latches in an adjacent latching position (166) of a latching contour (100) when actuated by the catch (106).

9. Brake (2) according to any one of Claims 4 to 7, wherein the fixing mechanism (56) has a spring hook (180) which is connected to the bracing element (80) and engages in a latching contour (100).

10. Brake (2) according to any one of Claims 4 to 7, wherein the fixing mechanism (56) has a number of ball catches at least one of which at a time, in a fixing position, engages in a latching position (166) of a latching contour (100) connected to or integrated with the bracing element (80).

11. Brake (2) according to any one of Claims 4 to 7, wherein the fixing mechanism (56) has a spring (192) which presses itself into a surrounding fixing contour (216) and has on its one end a loop for receiving the triggering element.

12. Brake (2) according to Claim 11, wherein the spring (192) is in the form of a spiral spring or loop spring.

13. Brake (2) according to Claim 11 or 12, wherein a friction lining (210) is provided between the spring (192) and the surrounding fixing contour (216).

14. Brake (2) according to any one of Claims 11 to 13, wherein the store is in the form of a spiral spring (50) and wherein spiral spring (50) and spring (192) are produced as an integral component.

15. Method for operating an electromechanically actuatable brake (2) comprising an electrically actuatable actuator (30) for applying the brake (2) in the application direction (42), which actuator (30) converts a rotary motion of a spindle (20) into a translational motion of an application element (26), in particular a piston, wherein the spindle (20) is driven by an electric motor (8), **characterized in that** the spindle is rotated through a predefined readiness angle in the application direction (42) by the electric motor (8) in order to place the brake (2) in a readiness state, and wherein the spindle (20) is rotated further in the application direction (42) through a predefined application angle in order to apply the brake (2).

16. Method according to Claim 15, with a brake (2) having a triggering element connected to the spindle (20) and a stop (46) fastened to the bracing element (80), wherein, in order to exchange the brake pads, the spindle (20) is rotated against the application direction (42) and wherein the triggering element is pressed against the stop (46), whereby spindle (20) and bracing element (80) rotate synchronously with one another.

## Revendications

1. Frein (2) pouvant être actionné électromécaniquement comprenant un actionneur (30) pouvant être actionné électriquement pour le serrage du frein (2) dans un sens de serrage (42), lequel actionneur convertit un mouvement de rotation d'une broche (20) en un mouvement de translation d'un élément de serrage (26), en particulier d'un piston, la broche (20) étant entraînée par un moteur électrique (8), un accumulateur mécanique pour l'accumulation d'énergie par rotation étant prévu, dont la première extrémité est accouplée à la broche (20) et dont la deuxième extrémité est accouplée à un contre-palier (80), l'accumulateur recevant de l'énergie lors de la rotation de la broche (20) dans le sens de serrage (42), au moyen de laquelle énergie la broche (20) est tournée en sens inverse au sens de serrage (42) à l'état hors tension du moteur électrique (8), de sorte que le frein (2) soit desserré, **caractérisé en ce que** le contre-palier (80) est monté à rotation et peut être fixé dans une pluralité de positions d'arrêt disposées de manière discrète ou continue.

2. Frein (2) selon la revendication 1, dans lequel l'accumulateur est configuré sous forme de ressort spiral (50).

3. Frein (2) selon la revendication 1 ou 2, dans lequel le contre-palier (80) est réalisé sous forme de disque.

4. Frein (2) selon l'une quelconque des revendications 1 à 3, comprenant un mécanisme d'arrêt (56) pouvant être actionné par un élément de déclenchement relié à la broche (20), dont l'actionnement conduit à une rotation du contre-palier (80) dans le sens de serrage (42) et à un arrêt dans une position d'arrêt adjacente.

5. Frein (2) selon la revendication 4, dans lequel l'élément de déclenchement est réalisé sous forme de goupille (62).

6. Frein (2) selon la revendication 4 ou 5, dans lequel l'accumulateur est accouplé à la broche (20) au moyen de l'élément de déclenchement.

7. Frein (2) selon l'une quelconque des revendications 5 et 6, dans lequel le contre-palier (80) comprend une butée (46).

8. Frein (2) selon l'une quelconque des revendications 4 à 7, dans lequel le mécanisme d'arrêt (56) comporte un élément d'encliquetage (120) relié au contre-palier (80) et comprenant un cliquet (106), lequel élément d'encliquetage, lors de l'actionnement par le cliquet (106), s'encliquète dans une position d'encliquetage adjacente (166) d'un contour d'encliquetage (100).

9. Frein (2) selon l'une quelconque des revendications 4 à 7, dans lequel le mécanisme d'arrêt (56) comprend un crochet élastique (180) relié au contre-palier (80), lequel crochet élastique vient en prise dans un contour d'encliquetage (100).

10. Frein (2) selon l'une quelconque des revendications 4 à 7, dans lequel le mécanisme d'arrêt (56) comprend un certain nombre d'encliquetages à billes, parmi lesquels respectivement au moins un vient en prise, dans une position d'arrêt, dans une position d'encliquetage (166) d'un contour d'encliquetage (100) relié au contre-palier (80) ou intégré dans celui-ci.

11. Frein (2) selon l'une quelconque des revendications 4 à 7, dans lequel le mécanisme d'arrêt (56) comprend un ressort (192) qui se presse dans un contour d'arrêt (216) l'entourant, et qui comprend à l'une de ses extrémités une boucle pour recevoir l'élément de déclenchement.

12. Frein (2) selon la revendication 11, dans lequel le ressort (192) est réalisé sous forme de ressort spiral ou sous forme de ressort enroulé.

13. Frein (2) selon la revendication 11 ou 12, dans lequel une garniture de friction (210) est prévue entre le ressort (192) et le contour d'arrêt (216) l'enveloppant.

14. Frein (2) selon l'une quelconque des revendications 11 à 13, dans lequel l'accumulateur est configuré sous forme de ressort spiral (50), et dans lequel le ressort spiral (50) et le ressort (192) sont fabriqués en tant que composant d'une seule pièce.

15. Procédé pour faire fonctionner un frein (2) pouvant être actionné électromécaniquement comprenant un actionneur (30) pouvant être actionné électriquement pour le serrage du frein (2) dans un sens de serrage (42), lequel actionneur convertit un mouvement de rotation d'une broche (20) en un mouvement de translation d'un élément de serrage (26), en particulier d'un piston, la broche (20) étant entraînée par un moteur électrique (8), **caractérisé en ce que**, pour mettre à disposition le frein (2) dans un état d'attente, la broche (20) est tournée par le moteur électrique (8) dans le sens de serrage (42) d'un angle d'attente prédéfini, et la broche (20) étant tournée davantage dans le sens de serrage (42) d'un angle de serrage prédéfini pour le serrage.

16. Procédé selon la revendication 15, comprenant un frein (2) pourvu d'un élément de déclenchement relié à la broche (20) et d'une butée (46) fixée au contre-palier (80), dans lequel, pour le changement des garnitures de frein, la broche (20) est tournée en sens inverse au sens de serrage (42), et dans lequel l'élément de déclenchement est pressé contre la butée (46), de sorte que la broche (20) et le contre-palier (80) tournent de manière synchrone l'un avec l'autre.
